# DEMANDE DE BREVET EUROPEEN

(11) **EP 4 506 924 A1**
(43) Date de publication de la demande: **12.02.2025**
(21) Numéro de dépôt: 24193437.1
(22) Date de dépôt: 07.08.2024
(51) Int. Cl.: G09B 5/06, G10L 25/87, A63H 33/38, A63H 5/00, G10L 25/63, G06F 3/01, B42D 3/12, G10L 15/02

(54) **PROCÉDÉ DE RÉCEPTION ET DE TRAITEMENT DE DONNÉES AUDIOS ET DÉCLENCHEMENT D EFFET SONORES ASSOCIÉS EN FONCTION DE LA PROSODIE ET/OU D'UN MOUVEMENT**

(30) Priorité: 08.08.2023 FR 2308565
(71) Demandeur: Poétie, 83210 Solliès-Toucas (FR)
(72) Inventeur: Goncalves, Fernando Daniel, 83210 Solliès-Toucas (FR)
(74) Mandataire: Bringer IP

(57) **Abrégé**

L'invention concerne un procédé de réception et de traitement de données audios comprenant des paroles correspondant à la lecture en temps réel d'un texte source pour le déclenchement d'effets sonores synchronisé avec ladite lecture du texte, caractérisé en ce qu'il comprend une étape (110) de détermination d'un index (12) de position du locuteur dans le texte source, par détection d'une correspondance entre les données audios réceptionnées et le texte source, une étape (112) de réception d'au moins une donnée représentative d'une donnée (10) de prosodie, et/ou de réception d'au moins une donnée de mouvement, une étape (140) de détermination de l'effet sonore à déclencher en fonction de l'index (12) de position, et en fonction de la donnée de prosodie et/ou de la donnée de mouvement, une étape (150) de déclenchement de l'effet sonore déterminé.

## Description

### Domaine technique de l'invention

L'invention concerne un procédé de réception et de traitement de données audios, et un système de réception et de traitement de données audios. En particulier, l'invention concerne un procédé permettant le déclenchement d'effets sonores associés à un texte source durant la lecture du texte source par un locuteur humain, prenant en compte la prosodie de la lecture et/ou un mouvement pendant la lecture.

### Arrière-plan technologique

L'invention se place dans le domaine de la lecture et propose d'accompagner la lecture d'un livre par le déclenchement d'effets sonores en lien avec le texte source qui est lu.

Différentes techniques de lecture interactive ont été déjà proposées pour permettre le déclenchement d'effets sonores pendant la lecture.

Certaines techniques proposent par exemple une estimation de la vitesse de lecture pour permettre le déclenchement et le pré-chargement d'effets sonores au moment qui semble opportun. Ces techniques sont simples mais le risque de déclenchement d'effet sonore au mauvais moment est élevé.

D'autres techniques se basent sur la reconnaissance de la lecture de mots-clés prédéterminés dans le texte, pour déclencher l'effet sonore associé. Ces techniques de détection de mots sont toutefois davantage soumises à des erreurs de reconnaissance et de suivi de la lecture.

En outre, les techniques actuelles ne proposent généralement qu'un effet sonore prévu pour chaque passage du texte et ne permettent pas de varier l'expérience de lecture à chaque nouvelle lecture à haute voix du texte source. Elles ne permettent en outre pas d'adapter l'effet sonore aux émotions et à la manière de lire du locuteur. Elles ne permettent également pas de déclencher des effets sonores en cas de mouvement du livre effectués par le locuteur pour une interaction avec le livre.

En particulier, les effets sonores utilisés sont basés sur un principe de « musique linéaire » qui utilise des sons joués en boucle et une transition d'une boucle à l'autre par fondu enchainé à la fin de séquences prédéterminées.

Les inventeurs ont ainsi cherché à fournir un procédé palliant ces inconvénients, en permettant l'intégration d'un procédé semblable au principe de musique adaptative à la lecture d'un texte, en particulier d'un livre

### Objectifs de l'invention

L'invention vise à fournir un procédé, un produit programme d'ordinateur et un système de réception et de traitement de données audios comprenant des paroles correspondant à la lecture en temps réel d'un texte source par un locuteur, pour le déclenchement d'effets sonores synchronisé avec ladite lecture du texte.

L'invention vise en particulier à fournir, dans au moins un mode de réalisation, un procédé, un produit programme d'ordinateur et un système de réception et de traitement de données audios permettant la prise en compte d'interactions et de variation d'émotions lors de la lecture du texte, pour un meilleur renouvellement de l'expérience de lecture, en particulier pour adapter l'effet sonore à l'émotion que veut transmettre le locuteur.

L'invention vise également à fournir, dans au moins un mode de réalisation, un procédé, un produit programme d'ordinateur et un système de réception et de traitement de données audios permettant un meilleur suivi de la lecture du texte source pour garantir un déclenchement approprié des effets sonores au moment opportun.

L'invention vise également à fournir, dans au moins un mode de réalisation, un procédé, un produit programme d'ordinateur et un système de réception et de traitement de données audios pouvant être embarqué dans un dispositif portable de taille réduite et pouvant fonctionner sans connexion à l'Internet.

### Exposé de l'invention

Pour ce faire, l'invention concerne un procédé de réception et de traitement, dans un système de réception et de traitement, de données audios comprenant des paroles correspondant à la lecture en temps réel d'un texte source par au moins un locuteur, pour le déclenchement d'effets sonores synchronisé avec ladite lecture du texte,
caractérisé en ce qu'il comprend :
- une étape de détermination d'un index de position du locuteur dans le texte source, par détection d'une correspondance entre les données audios réceptionnées et le texte source enregistré dans un module de stockage du système de réception et de traitement,
- une étape de réception d'au moins une donnée représentative d'une valeur de prosodie des données audios, dite donnée de prosodie, et/ou de réception d'au moins une donnée représentative de la présence ou de l'absence d'un mouvement d'un dispositif de reconnaissance de mouvement durant la lecture du texte et représentative de caractéristiques d'un mouvement présent, dite donnée de mouvement,
- une étape de détermination de l'effet sonore à déclencher en fonction de l'index de position, et en fonction de la donnée de prosodie et/ou de la donnée de mouvement,
- une étape de déclenchement de l'effet sonore déterminé.

Un procédé de réception et de traitement selon l'invention permet donc une prise en compte des données de prosodie, et/ou de mouvements, pour déterminer si un effet sonore doit être déclenché lorsque l'index de position correspond à une position de déclenchement de l'effet sonore. La prise en compte de ces données supplémentaires permet un renouvellement de l'expérience de lecture et une expérience de lecture plus immersive et personnalisée, un effet sonore pouvant être déclenché ou sélectionné, ou modifié ou non en prenant en compte les variations de lecture. L'objectif est d'adapter l'effet sonore à l'émotion que veut transmettre le locuteur du texte source.

Le déclenchement d'effet sonore est ainsi adaptatif, et peut évoluer en temps réel à chaque index de position en fonction des mouvements et/ou de la prosodie, qui sont respectivement représentatifs d'actions et d'émotions. Le fonctionnement est ainsi similaire au principe de musique adaptative, utilisée notamment dans les jeux-vidéos où la musique change de façon dynamique en fonction de l'activité du joueur. Les effets sonores sont répartis en fragments et en plusieurs couches qui peuvent être sélectionnés et éventuellement combinés en fonction des mouvements et de la prosodie.

En particulier, la prise en compte de la prosodie de la lecture permet de reconnaître les émotions du locuteur, par exemple adapter les effets sonores déclenchés à l'intensité sonore de lecture, à la vitesse de lecture, le ton de lecture, etc. Une combinaison de ces caractéristiques des paroles constituant les données audios constitue la prosodie. Plus généralement, la prosodie est définie comme l'ensemble des caractéristiques non-verbaux d'une parole prononcée, en particulier les variations de débit, de hauteur (ton et intonation) et variation de durée (accentuation et rythme), qui peuvent être représentatif d'une émotion transmise dans les paroles à la lecture du texte. Un même texte peut transmettre des émotions différentes selon la prosodie de la parole pendant sa lecture par un locuteur sans considérer la signification des mots et phrases prononcés. La prosodie peut également caractériser un accent sociolinguistique tel qu'un accent régional et peut également ajouter du contexte et du sens à une lecture.

La prosodie est détectée et reconnue grâce à l'utilisation d'au moins un algorithme dédié préconfiguré, par exemple mettant en oeuvre au moins un modèle d'apprentissage pré-entraîné avec des données de prosodie annotées, ou par exemple en utilisant des seuils de prosodie prédéterminés à l'avance, ajustés grâce aux données audios spécifiques au locuteur. Le ou les algorithmes prennent en compte la combinaison des caractéristiques de prosodie des données audios pour déterminer une prosodie des données audios, qui peut être associée à une émotion transmise à la lecture du texte. Le procédé peut également mettre en oeuvre un modèle d'apprentissage choisi parmi un groupe de modèles d'apprentissage en fonction du genre et/ou de l'âge estimé du locuteur et/ou de la langue parlée par le locuteur, chaque modèle d'apprentissage du groupe étant entraîné avec des données au moins en partie différentes associées à un genre, une tranche d'âge et/ou une langue particuliers.

L'algorithme est de préférence rapide à exécuter et autonome, en particulier qui nécessite peu de ressources informatiques et ne nécessite pas de connexion à l'Internet ou à toute autre base de données externe.

La prise en compte de mouvement permet d'associer à la lecture des interactions physiques sur le dispositif de reconnaissance de mouvement durant la lecture du texte, et de pouvoir lier la lecture et le mouvement au déclenchement d'effet sonore. La donnée de mouvement peut être une donnée indiquant l'absence de mouvement. La donnée de mouvement peut également comprendre une information représentative de la vitesse et/ou de l'accélération du mouvement.

Le mouvement est détectée et reconnue grâce à l'utilisation d'au moins un algorithme dédié préconfiguré, par exemple mettant en oeuvre au moins un modèle d'apprentissage pré-entraîné avec des données de mouvement annotées, ou par exemple en utilisant des modèles de mouvement prédéterminés à l'avance, ajustés grâce aux données de mouvement spécifiques au locuteur et/ou par rapport à la position initiale du dispositif de reconnaissance de mouvement. Le ou les algorithmes prennent en compte la combinaison des caractéristiques de mouvement détectés par le dispositif de reconnaissance de mouvement pour déterminer le mouvement reconnu.

Avantageusement et selon l'invention, le texte source est enregistré dans le dispositif de traitement sous la forme d'une liste de phonèmes, et le dispositif de traitement est configuré pour détecter dans les données audios la présence de phonème correspondant au texte source.

Selon cet aspect de l'invention, la décomposition du texte en phonèmes permet d'améliorer la précision de l'index de position ainsi que la vitesse de calcul et ainsi d'améliorer les conditions de déclenchement. La détection de phonèmes permet un résultat meilleur qu'une détection de mots et est davantage compatible avec une lecture hachée, un retour en arrière dans la lecture, des pauses dans la lecture, etc.

En outre, la détection de phonème nécessite moins de ressources que la détection de mot et permet ainsi d'être mis en oeuvre par un dispositif portable et/ou embarqué, même en l'absence de connexion à l'Internet. En particulier, le nombre de phonèmes différents à détecter est très inférieur au nombre de mots qu'il est possible de détecter dans les procédés utilisant la détection de mots et la détection de phonème ne nécessite pas de déduction du mot suivant. La vitesse de détection de phonème est ainsi de l'ordre de 200ms.

Avantageusement et selon l'invention, l'index de position du locuteur correspond à un phonème de la liste de phonèmes du texte source, et l'étape de détermination de l'index de position du locuteur dans le texte source comprend :
- une sous-étape de réception de la position actuelle de l'index dans la liste des phonèmes du texte source,
- une sous-étape de comparaison d'au moins un phonème détecté dans les données audios avec au moins un phonème attendu parmi les phonèmes suivants dans la liste de phonèmes du texte source,
- si aucun phonème détecté dans les données audios ne correspond avec les phonèmes suivants, une sous-étape de réception d'une pluralité de phonèmes détectés dans les données audios et une sous-étape de recherche dans au moins une partie du texte source d'une séquence de phonèmes dans la liste de phonèmes du texte source correspondant à ladite pluralité de phonèmes détectés,
- si la pluralité de phonèmes détectés dans les données audios ne correspondant avec aucune séquence de phonèmes dans la liste de phonèmes du texte source, une sous-étape de recherche dans la totalité du texte source d'une séquence de phonèmes dans la liste de phonèmes du texte source correspondant à ladite pluralité de phonèmes détectés,
- en cas de détection d'une correspondance d'un phonème ou d'une pluralité de phonème détectés avec la liste de phonèmes du texte source, une sous-étape de mise à jour de l'index avec ledit phonème correspondant ou le dernier phonème de la séquence de phonèmes correspondante.

Selon cet aspect de l'invention, le suivi de la correspondance des phonèmes tel que décrit permet une détermination efficace de l'index de position pour le déclenchement des effets sonores.

La sous-étape de recherche dans au moins une partie du texte de source d'une séquence de phonèmes peut être répétée à plusieurs reprises en élargissant petit à petit la taille de la partie du texte de source dans laquelle la pluralité de phonèmes détectés est recherchée.

La sous-étape de recherche dans la totalité du texte source d'une séquence de phonèmes peut également être réalisée en continu et en parallèle aux autres sous-étapes, de sorte à fournir un résultat rapidement si les sous-étapes précédentes n'ont pas été concluantes et/ou si l'indice de confiance de la correspondance de la séquence de phonèmes avec la pluralité de phonèmes détectés est élevé.

Avantageusement, si aucun phonème détecté dans les données audios ne correspond avec les phonèmes suivants, l'étape de détermination de l'index de position du locuteur dans le texte source comprend également une étape d'avancement de l'index au phonème suivant. Grâce à cette étape, le procédé peut continuer à avancer dans la liste de phonèmes pour éviter de perdre la correspondance entre les données audios et la liste des phonèmes.

Avantageusement et selon l'invention, la comparaison entre les données audios et la liste de phonèmes comprend une détermination d'un indice représentatif de la ressemblance entre le phonème détecté dans les données audios et le phonème de la liste de phonèmes. Cet indice représentatif de la ressemblance est également représentatif de la distance entre ces phonèmes selon sa valeur, par exemple une valeur égale à zéro indique une correspondance parfaite, une valeur proche de zéro indique une ressemblance et une valeur positive plus élevée indique une distance entre les phonèmes. Par exemple, dans la langue française, les phonèmes débutant par les lettres « p » et « b » sont considérés comme ressemblants et donc avec une distance faible, de la même façon que les lettres « t » et « d ». Si la valeur de l'indice est inférieure à un seuil prédéterminé, on peut considérer qu'il y a correspondance des phonèmes et avancer l'index. Dans les variantes de l'invention où un indice de confiance tel que décrit ci-après est mis en oeuvre, cet indice de confiance peut être baissé si la correspondance des phonèmes n'est pas parfaite (indice de ressemblance non nul mais inférieur au seuil prédéterminé). Ainsi, avantageusement et selon l'invention, la sous-étape de comparaison d'au moins un phonème détecté dans les données audios avec au moins un phonème attendu parmi les phonèmes suivants dans la liste de phonèmes du texte source comprend une détermination d'un indice représentatif de la ressemblance entre le phonème détecté dans les données audios et le phonème de la liste de phonèmes, et si l'indice représentatif de la ressemblance est inférieur à un seuil prédéterminé, une sous-étape de mise à jour de l'index avec ledit phonème détecté et une sous-étape de diminution de l'indice de confiance.

Chacune de ces sous-étapes présente sa propre tolérance aux erreurs, par exemple autorise ou non la substitution d'un phonème avec un phonème ressemblant, ou présente un seuil de pourcentage de correspondance entre une liste de phonèmes détectés avec une liste de phonèmes du texte source.

Avantageusement et selon l'invention, l'étape de déclenchement de l'effet sonore comprend une sous-étape de vérification de la valeur d'un indice de confiance et en ce que l'effet sonore est déclenché uniquement si l'indice de confiance est supérieur à un seuil prédéterminé.

Selon cet aspect de l'invention, l'indice de confiance permet ainsi d'éviter le déclenchement d'effet sonore en cas de manque de confiance dans le suivi de position. En particulier, cela permet d'éviter le déclenchement d'effet sonore à un moment inopportun du fait d'une mauvaise détermination de l'index de position.

Chaque effet sonore peut être lié à son propre seuil prédéterminé.

Avantageusement et selon l'invention, le procédé comprend une étape d'augmentation de la valeur de l'indice de confiance en cas de détection d'une correspondance d'un phonème ou d'une pluralité de phonème détectés avec la liste de phonèmes du texte source et comprend une étape de diminution de la valeur de l'indice de confiance si aucun phonème détecté dans les données audios ne correspond avec les phonèmes suivants.

Selon cet aspect de l'invention, l'augmentation et la diminution de l'indice de confiance sont liées à la détection de correspondance de phonèmes, en particulier l'indice de confiance permet ainsi d'éviter le déclenchement d'effet sonore si la détection de correspondance de phonème n'est pas réalisée avec suffisamment de confiance.

Avantageusement et selon l'invention, l'ensemble des effets sonores associés au texte source sont répartis dans une pluralité de séquences temporelles associées à des portions du texte source, chaque séquence temporelle étant associée à un effet sonore ou à un groupe d'effets sonores comprenant plusieurs effets sonores, et lorsque l'index de position correspond à une séquence temporelle associée à un groupe d'effets sonores, l'étape de détermination de l'effet sonore à déclencher comprend :
- une sous-étape de récupération, en fonction de l'index de position, du groupe d'effets sonores associé à la séquence temporelle dans laquelle se trouve l'index de position,
- une sous-étape de détermination, en fonction de la donnée de prosodie et/ou de la donnée de mouvement, de l'effet sonore à déclencher parmi les effets sonores du groupe d'effets sonores.

Selon cet aspect de l'invention, les séquences temporelles sont chacune associées à un ou plusieurs effets sonores et les effets sonores déclenchés sont adaptés aux données de prosodie et/ou de mouvement déterminés. L'objectif est de proposer, pour certaines séquences temporelles au moins, des variantes d'effet sonore à déclencher pour un même index de position.

Avantageusement et selon l'invention, les effets sonores pouvant être déclenchés dans chaque groupe d'effet sonore peuvent également dépendre de paramètres prédéfinis à l'avance par le locuteur, ou peuvent varier en fonction des données de prosodie et de l'indice de confiance dans les variantes associées.

Par exemple, le locuteur peut sélectionner un mode « jour » ou un mode « nuit » qui permet d'empêcher le déclenchement de certains effets sonores dans le groupe d'effet sonore. La prise en compte de l'indice de confiance permet également de limiter les risques de déclenchement intempestif d'effet sonore au mauvais moment, par exemple en retardant le déclenchement et/ou en ne déclenchant pas un effet sonore spécifique.

Le locuteur peut également activer ou désactiver la détection du mouvement ou de la prosodie pour la lecture.

Avantageusement et selon l'invention, la donnée de prosodie comprend des données ou une combinaison de données parmi différents types de données dans la liste suivante :
- des données sur l'intensité des paroles des données audios,
- des données sur la fréquence et/ou la fréquence fondamentale des paroles des données audios,
- des données sur l'intensité et/ou de fréquence et/ou de fréquence fondamentale des consonnes prononcées dans les données audios,
- des données sur l'intensité et/ou de fréquence et/ou de fréquence fondamentale des voyelles prononcées dans les données audios,
- des données sur la longueur des voyelles et/ou des paroles prononcées dans les données audios,
- des données sur la longueur des consonnes prononcées dans les données audios,
- des données sur le débit de parole des données audios.

Selon cet aspect de l'invention, la prosodie dépend de plusieurs facteurs qui permettent de symboliser l'émotion du locuteur du texte source pendant la lecture à haute voix du texte. La donnée de prosodie peut se baser sur une valeur absolue de chaque donnée de la liste ou sur une variation temporelle des valeurs de celles-ci, par exemple une augmentation ou diminution graduelle de l'intensité sonore.

Avantageusement et selon l'invention, le procédé comprend une étape de calibration permettant de déterminer ou d'estimer, à partir des données audios, le genre du locuteur et/ou l'âge du locuteur et/ou la langue parlée par le locuteur.

Selon cet aspect de l'invention, la détermination ou l'estimation de l'âge ou le genre du locuteur, ainsi que la langue parlée, peut permettre d'ajuster les seuils de détection de variation de prosodie pour mieux adapter le déclenchement d'effet sonore. En particulier, un homme ou une femme, un adulte et un enfant, ou deux locuteurs de langue différente ont généralement des variations moyennes de prosodie différentes.

Avantageusement et selon l'invention, la donnée de mouvement comprend des données relatives à un déplacement et/ou une rotation dans l'espace et/ou à la vitesse de déplacement du dispositif de reconnaissance de mouvement, et/ou des données relatives à la correspondance d'un mouvement ou d'une combinaison de mouvement détectés par le dispositif de reconnaissance de mouvement avec un mouvement prédéterminé parmi une liste de mouvement prédéterminé enregistrée dans un module de stockage du système de traitement.

Selon cet aspect de l'invention, différents types de mouvement peuvent être pris en compte pour la sélection de l'effet sonore à déclencher. En particulier, le procédé peut comprendre la détection d'un mouvement prédéterminé, par exemple si l'utilisateur fait un cercle avec le dispositif de reconnaissance de mouvement.

Le mouvement dans l'espace est de façon connue constitué d'un ou d'une combinaison des mouvements suivants :
- translation verticale,
- translation latérale,
- translation longitudinale,
- tangage,
- lacet,
- roulis
- mouvement de secousse,
- chocs brefs.

La vitesse et/ou l'accélération du mouvement peuvent également être intégrées à la donnée de mouvement.

Avantageusement et selon l'invention, l'étape de déclenchement d'effet sonore est exécutée lorsque l'index de position est à une position égale ou après un index de déclenchement prédéterminé, ou dans une fenêtre de déclenchement prédéterminée, et en ce que l'effet sonore peut être immédiatement émis dès que l'index de position atteint ou dépasse l'index de déclenchement ou atteint la fenêtre de déclenchement, ou émis de façon différée après la fin d'un effet sonore en cours d'émission.

Selon cet aspect de l'invention, le déclenchement d'effet sonore peut être immédiat ou différé, par exemple l'effet sonore déterminé peut être déclenché à la fin d'une séquence temporelle. La temporalité du déclenchement dépend en particulier de la position ou de la fenêtre de déclenchement dans laquelle l'index de position se trouve.

L'effet sonore peut également être déclenché à un moment temporel absolu (par exemple à un instant t) ou relatif (par exemple dans x secondes ou en fonction du tempo, par exemple après la dernière note d'une mesure d'un morceau de musique). L'effet sonore peut également être programmé pour être déclenché à plusieurs reprises, par exemple une fois immédiatement et une fois x secondes plus tard.

L'invention concerne également un produit programme d'ordinateur de réception et de traitement de données audios correspondant à la lecture en temps réel d'un texte source par au moins un locuteur, pour le déclenchement d'effets sonores synchronisé avec ladite lecture du texte, ledit produit programme d'ordinateur comprenant des instructions de code de programme pour l'exécution, lorsque ledit produit programme d'ordinateur est exécuté sur un dispositif informatique, des étapes du procédé selon l'invention.

Le produit programme d'ordinateur est avantageusement stocké dans le dispositif de traitement, en particulier dans un dispositif informatique portatif, de préférence un téléphone intelligent, une tablette numérique ou une montre intelligente, par exemple sous la forme d'une application.

L'invention concerne également un système de réception et de traitement de données audios correspondant à la lecture en temps réel d'un texte source par au moins un locuteur, pour le déclenchement d'effets sonores synchronisé avec ladite lecture du texte, caractérisé en ce qu'il comprend :
- un module de stockage du texte source,
- un module de réception des données audios,
- un module de traitement des données audio, configuré pour la détermination d'un index de position du locuteur dans le texte source, par détection d'une correspondance entre les données audios réceptionnées et le texte source enregistré dans le module de stockage,
- un dispositif de reconnaissance de mouvement configuré pour fournir au moins une donnée représentative de la présence ou de l'absence d'un mouvement d'un dispositif de reconnaissance de mouvement durant la lecture du texte et représentative de caractéristiques d'un mouvement présent, dite donnée de mouvement, et/ou un module d'analyse de la variation de la prosodie des données audios configuré pour fournir au moins une donnée représentative d'une variation de prosodie des données audios
- un module de détermination de l'effet sonore à déclencher en fonction de l'index de position, et en fonction de la donnée de prosodie et/ou de la donnée de mouvement,
- un dispositif d'émission sonore configuré pour l'émission de l'effet sonore déterminé.

Avantageusement, le système de réception et de traitement selon l'invention est configuré pour mettre en oeuvre le procédé de réception et de traitement selon l'invention.

Avantageusement et selon l'invention, le procédé de réception et de traitement selon l'invention est configuré pour être mis en oeuvre par un système de réception et de traitement selon l'invention.

Avantageusement et selon l'invention, le système comprend un dispositif informatique portatif, de préférence un téléphone intelligent, une tablette numérique ou une montre intelligente (*smartwatch* en anglais), comprenant le module de stockage du texte source, le module de réception des données audios, le module de traitement des données audio, le dispositif de reconnaissance de mouvement et/ou le module d'analyse de la variation de la prosodie, le module de détermination d'effet sonore et le dispositif d'émission sonore.

Selon cet aspect de l'invention, une majeure partie ou l'ensemble des constituants du système peut être intégré à un dispositif informatique portatif tel qu'un téléphone intelligent (couramment appelé *smartphone*), de sorte à réunir les fonctionnalités dans un même système. Le dispositif informatique portatif peut également afficher le texte source ou de préférence être attaché à un support physique du texte source, en particulier où est imprimé le texte source, tel qu'un livre.

Le dispositif informatique est configuré pour mettre en oeuvre le procédé de réception et de traitement selon l'invention en particulier grâce à une combinaison d'un ou plusieurs composants informatiques tels qu'un processeur (CPU pour *Central Processing Unit* en anglais), et/ou un processeur graphique (GPU pour *Graphics Processing Unit* en anglais), et/ou un processeur de signal numérique (DSP pour *Digital Signal Processor* en anglais), et/ou une ou plusieurs mémoires, et/ou un convertisseur analogique/numérique, un microphone, un accéléromètre, un gyroscope, etc.

Avantageusement et selon l'invention, le système comprend un dispositif de reconnaissance de mouvement et un dispositif d'attache du dispositif de reconnaissance de mouvement, configuré pour permettre d'attacher le dispositif de reconnaissance de mouvement à un support sur lequel est imprimé le texte source, de sorte à ce que le dispositif de reconnaissance de mouvement soit mécaniquement solidaire dudit support lors de la lecture du support.

Selon cet aspect de l'invention, le dispositif de reconnaissance de mouvement peut être directement associé au support physique sur lequel est imprimé le texte source, de sorte à ce qu'un mouvement du support physique entraîne un mouvement du dispositif de reconnaissance de mouvement. Ainsi, un mouvement du support physique est détecté et est pris en compte dans la donnée de mouvement.

Lorsque le dispositif de reconnaissance de mouvement est intégré dans un dispositif informatique portatif, le dispositif d'attache est configuré pour attacher le dispositif informatique portatif au support physique.

Avantageusement et selon l'invention, le dispositif d'attache est formé d'un élément ou d'une combinaison d'éléments parmi les éléments de la liste suivante :
- des éléments élastiques reliés au support sur lequel est imprimé le texte source, configurés pour un maintien en position du dispositif de reconnaissance de mouvement,
- une poche agencée dans la couverture dudit support, configurée pour accueillir le dispositif de reconnaissance de mouvement,
- un compartiment agencé dans la couverture dudit support, configurée pour accueillir le dispositif de reconnaissance de mouvement,
- un aimant permanent agencé sur ledit support et configuré pour une aimantation avec un élément magnétique agencé sur le dispositif de reconnaissance de mouvement, ou un aimant permanent agencé sur le dispositif de reconnaissance de mouvement et configuré pour une aimantation avec un élément magnétique agencé sur ledit support,
- une pochette clipsée sur ledit support, configurée pour accueillir le dispositif de reconnaissance de mouvement.

Selon cet aspect de l'invention, ces différentes variantes d'attache permettent une compatibilité avec différents types de dispositif de reconnaissance de mouvement, en particulier lorsque celui-ci est intégré dans un dispositif informatique portatif.

L'invention concerne également un procédé de réception et de traitement, un produit programme d'ordinateur et un système de réception et de traitement caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un procédé de réception et de traitement de données audios selon un mode de réalisation de l'invention,
[Fig. 2] est une vue schématique d'un texte source et d'une liste de phonèmes tels qu'enregistrés dans un module de stockage d'un système de réception et de traitement selon un mode de réalisation de l'invention,
[Fig. 3] est un graphique illustrant schématiquement une variation de prosodie de données audios traitées par un procédé de réception et de traitement selon un mode de réalisation de l'invention,
[Fig. 4] est un graphique illustrant schématiquement trois pistes audios comprenant des effets sonores pouvant être déclenchés lors de l'exécution d'un procédé de réception et de traitement selon un mode de réalisation de l'invention,
[Fig. 5] est une vue schématique d'un système de réception et de traitement de données audios selon un mode de réalisation de l'invention et selon une vue de face et de dos d'un livre formant support du texte source.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

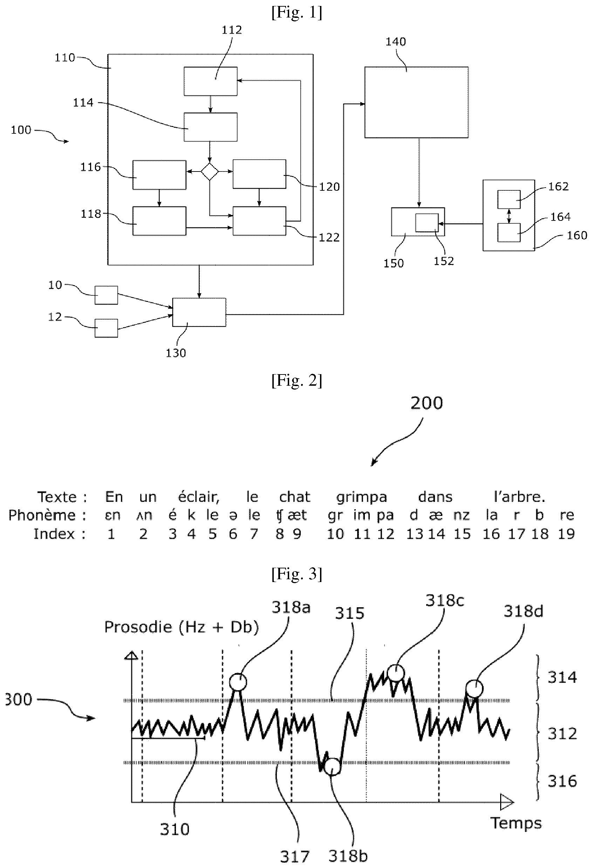

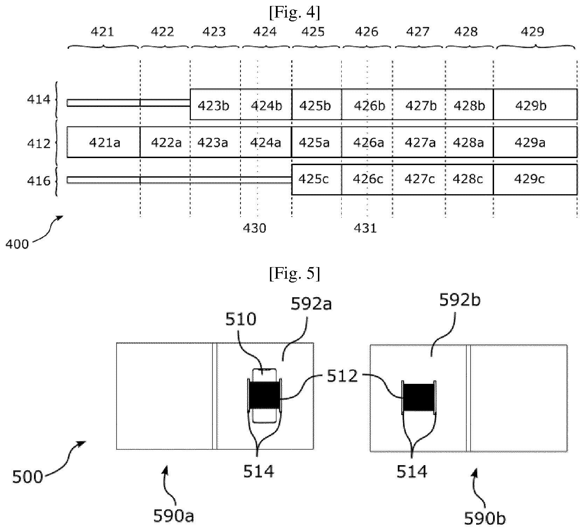

La figure 1 représente schématiquement un procédé 100 de réception et de traitement de données audios selon un mode de réalisation de l'invention. Le procédé permet la réception et le traitement de données audios comprenant des paroles correspondant à la lecture en temps réel d'un texte source par un locuteur, pour le déclenchement d'effets sonores synchronisé avec ladite lecture du texte. Le procédé est ici mis en oeuvre dans un système de réception et de traitement de données audio, dont un mode de réalisation est décrit plus bas en référence avec la figure 5.

Le procédé comprend une étape 110 de détermination d'un index de position du locuteur dans le texte source, par détection d'une correspondance entre les données audios réceptionnées et le texte source enregistré dans un module de stockage du système de réception et de traitement.

Le texte source est enregistré dans le dispositif de traitement sous la forme d'une liste de phonèmes, et le dispositif de traitement est configuré pour détecter dans les données audios la présence de phonème correspondant au texte source. La liste de phonèmes est créée au préalable, de façon automatique, manuelle ou semi-automatique (par exemple avec correction manuelle d'un prétraitement automatique). La création de la liste de phonèmes est généralement réalisée hors du système mettant en oeuvre le procédé selon l'invention.

La figure 2 représente schématiquement un exemple 200 de phrase en langue française du texte source tel qu'enregistré dans le module de stockage « En un éclair, le chat grimpa dans l'arbre. », sa transposition en phonèmes « εn Λn é k le 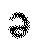 le t∫ æt gr im pa d æ nz la r b re » et l'index attribué à chaque phonème associé à cette phrase exemple, l'index étant compris dans cet exemple entre 1 et 19. D'autres numérotations d'index peuvent être utilisées, par exemple le premier index peut correspondre à un index zéro, etc.

L'index de position du locuteur correspond à l'index du phonème correspondant de la liste de phonèmes du texte source, et l'étape 110 de détermination de l'index de position du locuteur dans le texte source comprend :
- une sous-étape 112 de réception de la position actuelle de l'index dans la liste des phonèmes du texte source. Au départ, l'index de position correspond à l'index du premier phonème, par exemple l'index 1 dans la phrase exemple de la figure 2.
- une sous-étape 114 de comparaison d'au moins un phonème détecté dans les données audios avec au moins un phonème attendu parmi les phonèmes suivants dans la liste de phonèmes du texte source. Les phonèmes suivants dans la liste des phonèmes de la phrase exemple sont les phonèmes « Λn », « é », « k » et « le ».
- si aucun phonème détecté dans les données audios ne correspond avec les phonèmes suivants, une sous-étape 116 de réception d'une pluralité de phonèmes détectés dans les données audios et une sous-étape 118 de recherche dans au moins une partie du texte source d'une séquence de phonèmes dans la liste de phonèmes du texte source correspondant à ladite pluralité de phonèmes détectés. Par exemple, dans la phrase exemple de la figure 2, les phonèmes « le t∫ æt gr im pa » sont détectés dans les données audios et l'index de position se place alors à la fin de cette suite de phonèmes dans le texte source, c'est-à-dire à l'index 12 qui correspond au dernier phonème de la suite.

- si la pluralité de phonèmes détectés dans les données audios ne correspondant avec aucune séquence de phonèmes dans la liste de phonèmes du texte source, une sous-étape 120 de recherche dans la totalité du texte source d'une séquence de phonèmes dans la liste de phonèmes du texte source correspondant à ladite pluralité de phonèmes détectés. Cette sous-étape permet la recherche d'une séquence de phonèmes dans l'ensemble du texte source, par exemple les phrases suivant la phrase exemple ou les phrases précédant la phrase exemple, non visibles sur les figures.
- en cas de détection d'une correspondance d'un phonème ou d'une pluralité de phonème détectés avec la liste de phonèmes du texte source, une sous-étape 122 de mise à jour de l'index avec ledit phonème correspondant ou le dernier phonème de la séquence de phonèmes correspondante. Cette étape finale du cycle permet la mise à jour de l'index en fonction de la correspondance qui a été établie dans les sous-étapes précédentes. L'index mis à jour est récupéré lors d'une nouvelle exécution de la sous-étape 112 de réception de la position actuelle de l'index.

Le procédé peut également comprendre d'autres sous-étapes non décrites permettant d'assurer la mise en correspondance des phonèmes détectés dans le texte audio et des phonèmes tels qu'enregistrés par le texte source.

Le procédé comprend ensuite une étape 130 de réception d'au moins une donnée représentative d'une valeur de prosodie des données audios, dite donnée 10 de prosodie, et/ou de réception d'au moins une donnée représentative de la présence ou de l'absence d'un mouvement d'un dispositif de reconnaissance de mouvement durant la lecture du texte et représentative de caractéristiques d'un mouvement présent, dite donnée 12 de mouvement.

La prosodie est représentative de l'émotion donnée au locuteur du texte source lors de sa lecture. La prise en compte du mouvement permet quant à elle de permettre une interactivité lors de la lecture du texte source.

La prosodie et le mouvement sont pris en compte indépendamment ou en combinaison dans la suite du procédé. Ce choix peut être réalisé par un utilisateur du procédé, par exemple grâce à une interface lui permettant de sélectionner si la prosodie et/ou le mouvement sont pris en compte dans les lectures futures.

La donnée de prosodie comprend des données ou une combinaison de données parmi différents types de données dans la liste suivante :
- des données sur l'intensité des paroles des données audios,
- des données sur la fréquence et/ou la fréquence fondamentale des paroles des données audios,
- des données sur l'intensité et/ou de fréquence et/ou de fréquence fondamentale des consonnes prononcées dans les données audios,
- des données sur l'intensité et/ou de fréquence et/ou de fréquence fondamentale des voyelles prononcées dans les données audios,
- des données sur la longueur des voyelles et/ou des paroles prononcées dans les données audios,
- des données sur la longueur des consonnes prononcées dans les données audios,
- des données sur le débit de parole des données audios.

Une combinaison de ces données permet de mieux caractériser l'émotion et adapter le déclenchement d'effets sonores en fonction.

La figure 3 est un graphique 300 illustratif représentant un exemple de prosodie en fonction du temps, telle que détectée à partir des données audios. Pour des raisons de simplification et à but uniquement illustratif, la prosodie dans le graphique 300 prend en compte uniquement l'intensité et la fréquence fondamentale des données audios. La valeur attribuée à la donnée de prosodie évolue ici en deux dimensions mais en pratique la valeur de la donnée de prosodie est caractérisée par la variation de plusieurs données par exemple réunies dans un vecteur ou une matrice.

Durant un premier intervalle de temps, dit intervalle 310 de calibration, l'intensité et la fréquence fondamentale sont mesurées pour obtenir une valeur qui sera considérée comme moyenne pour le locuteur des données audios. L'intervalle 310 de calibration peut être défini par un déclencheur, par exemple à partir d'un premier index de position prédéfini, et se terminer à partir d'un deuxième index de position prédéfini.

La valeur moyenne de prosodie déterminée lors de l'intervalle 310 de calibration est attribuée à une zone dite zone 312 moyenne. En cas de variation de la valeur de prosodie au cours du temps, cette valeur est susceptible de se trouver dans d'autres zones, une zone 314 haute définie par les valeurs au-dessus d'un seuil 315 haut et une zone 316 basse définie par les valeurs en dessous d'un seuil 317 bas. La variation de la valeur est par exemple représentative d'un pourcentage de variation de la fréquence fondamentale et d'un pourcentage de variation de l'intensité, ces deux valeurs pouvant être pondérées différemment pour donner la valeur totale. Davantage de zones peuvent être définies en fonction des données prises en compte dans la prosodie, par exemple quatre zones, cinq zones, ou davantage de zones. Les zones ainsi décrites ont principalement un but illustratif et les interprétations des valeurs de prosodies peuvent se baser sur d'autres méthodes de classement, par exemple des arbres de décisions, etc.

Les valeurs seuil définissant chaque zone peuvent également dépendre de données de calibration obtenues à une étape de calibration permettant de déterminer ou d'estimer, à partir des données audios, le genre du locuteur et/ou l'âge du locuteur et/ou la langue parlée par le locuteur. Ces données de calibration peuvent également permettre de déterminer un modèle d'apprentissage automatique a mettre en oeuvre pour la détermination des données de prosodie, parmi un groupe de modèles d'apprentissage automatique embarqués dans le système mettant en oeuvre le procédé, chaque modèle d'apprentissage automatique étant entraîné au moins en partie par des données liées au genre du locuteur et/ou à l'âge du locuteur et/ou à la langue parlée par le locuteur et donc adapté à l'analyse de la prosodie pour ce genre, cet âge ou cette langue.

Chaque zone correspond ensuite à une piste audio comprenant les effets sonores à déclencher. Lorsqu'un effet sonore doit être déclenché, par exemple aux instants 318a, 318b, 318c, 318d représentés par des cercles, l'effet sonore de la piste audio associée à la zone dans laquelle se trouve la valeur de prosodie peut être déclenché. Ici, les instants 318a, 318c et 318d sont liés à la zone haute et l'instant 318b est lié à la zone basse. Les données de prosodie peuvent également être utilisées en temps réel pour faire varier l'effet sonore en cours, par exemple en augmentant ou diminuant son volume, sa hauteur, son tempo, son écho, etc.

Le déclenchement de l'effet sonore peut bien entendu être soumis à d'autres conditions, en particulier à la donnée de mouvement.

La donnée de mouvement comprend des données relatives à un déplacement et/ou une rotation dans l'espace et/ou à la vitesse de déplacement du dispositif de reconnaissance de mouvement, et/ou des données relatives à la correspondance d'un mouvement ou d'une combinaison de mouvement détectés par le dispositif de reconnaissance de mouvement avec un mouvement prédéterminé parmi une liste de mouvement prédéterminé enregistrée dans un module de stockage du système de traitement. L'absence de mouvement est également une donnée de mouvement qui peut être interprété par le procédé.

D'autres détails sur la donnée de mouvement sont décrits plus bas en référence à la figure 5 illustrant un système de réception et traitement de données audios.

De retour à la figure 1, le procédé comprend ensuite une étape 140 de détermination de l'effet sonore à déclencher en fonction de l'index de position, et en fonction de la donnée de prosodie et/ou de la donnée de mouvement. L'effet sonore déclenché est ainsi adapté en fonction du contexte de lecture fourni par la prosodie et/ou les mouvements.

En particulier, dans un mode de réalisation de l'invention, l'ensemble des effets sonores associés au texte source sont répartis dans une pluralité de séquences temporelles associées à des portions du texte source, chaque séquence temporelle étant associée à un effet sonore ou à un groupe d'effets sonores comprenant plusieurs effets sonores, et en ce que lorsque l'index de position correspond à une séquence temporelle associée à un groupe d'effets sonores, l'étape 140 de détermination de l'effet sonore à déclencher comprend :
- une sous-étape 142 de récupération, en fonction de l'index de position, du groupe d'effets sonores associé à la séquence temporelle dans laquelle se trouve l'index de position,
- une sous-étape 144 de détermination, en fonction de la donnée de prosodie et/ou de la donnée de mouvement, de l'effet sonore à déclencher parmi les effets sonores du groupe d'effets sonores.

La figure 4 représente schématiquement un graphique 400 temporel comprenant trois pistes audios, une piste 412 moyenne, une piste 414 haute et une piste 416 basse, correspondant respectivement aux effets sonores à déclencher en fonction des zones moyenne, haute et basse décrites précédemment. Comme décrit précédemment, ces pistes sont principalement à but illustratif et en pratique les déclenchements d'effets sonores peuvent ne pas être associés à des pistes particulières.

Les pistes audios se lisent de gauche à droite au fur et à mesure de l'avancée de l'index de position et de la lecture. Les effets sonores des pistes audios sont regroupés en groupes de un à trois effets sonores associés à des séquences 421, 422, 423, 424, 425, 426, 427, 428, 429 temporelles.

La première séquence 421 temporelle est associée à un groupe qui comprend par exemple un effet sonore 421a qui est appliqué quelle que soit la zone atteinte par la valeur de prosodie. La deuxième séquence 422 temporelle est associée à un groupe qui comprend également un effet sonore 422a, en particulier car ces deux premières séquences temporelles correspondent à l'intervalle de calibration tel que décrit précédemment.

Les deux séquences 423 et 424 suivantes sont associées à des groupes comprenant chacun deux effets sonores, 423a et 423b d'une part et 424a et 424b d'autre part. Ainsi, si la valeur de prosodie est dans la zone haute, les effets sonores 423b et 424b seront joués tandis que si la valeur de prosodie est dans la zone moyenne ou basse, les effets sonores 423a et 424a seront joués.

Enfin, les séquences 425 à 429 suivantes sont associées à des groupes comprenant un effet sonore pour chaque zone, référencés respectivement 425a, 425b et 425c, 426a, 426b et 426c, 427a, 427b et 427c, 428a, 428b et 428c, 429a, 429b et 429c. Ainsi, un effet sonore est disponible pour la zone haute, la zone moyenne et la zone basse atteinte par la valeur de prosodie.

L'étape 150 de déclenchement d'effet sonore est exécutée lorsque l'index de position est à une position égale ou après un index de déclenchement prédéterminé, ou dans une fenêtre de déclenchement prédéterminée, et l'effet sonore peut être immédiatement émis dès que l'index de position atteint ou dépasse l'index de déclenchement ou atteint la fenêtre de déclenchement, ou émis de façon différée après la fin d'un effet sonore en cours d'émission. Si l'index de position atteint par exemple le repère 430, et que la valeur de prosodie a évolué depuis le début de la séquence 424 temporelle, l'effet sonore joué peut être modifié immédiatement. Alternativement, si l'index de position atteint par exemple le repère 431, et que la valeur de prosodie a évolué depuis le début de la séquence 426 temporelle l'effet sonore joué peut être modifié uniquement au début de la séquence 427 temporelle.

Selon un mode de réalisation non représenté, ces pistes audios correspondent à un fond sonore et des effets sonores supplémentaires peuvent être ajoutés en cours de lecture en fonction des données de prosodie et/ou des données de mouvement et/ou de l'index de position. En outre, plusieurs effets sonores peuvent être combinés, en fonction de la prosodie et/ou du mouvement. Par exemple, pour une lecture d'un texte, un premier effet sonore comprenant le son d'un seul instrument de musique peut être joué et si l'intensité sonore détectée par détermination de la prosodie augmente, un ou plusieurs autres effets sonores ajoutant des instruments de musique peuvent se combiner au premier effet sonore.

En outre, le nombre de pistes sonores et de zones sonores peut être plus important que représentés.

Le procédé comprend enfin une étape 150 de déclenchement de l'effet sonore déterminé. L'effet sonore est en particulier émis par un dispositif d'émission sonore du système de réception et de traitement. Ce dispositif d'émission sonore est par exemple un haut-parleur ou un casque audio.

L'émission de l'effet sonore permet ainsi d'augmenter l'immersion lors de la lecture du texte source.

L'étape 150 de déclenchement de l'effet sonore comprend une sous-étape 152 de vérification de la valeur d'un indice de confiance et l'effet sonore est déclenché uniquement si l'indice de confiance est supérieur à un seuil prédéterminé.

L'indice de confiance est géré par un sous-processus 160 de gestion de l'indice de confiance, qui comprend une étape 162 d'augmentation de la valeur de l'indice de confiance en cas de détection d'une correspondance d'un phonème ou d'une pluralité de phonème détectés avec la liste de phonèmes du texte source et il comprend une étape 164 de diminution de la valeur de l'indice de confiance si aucun phonème détecté dans les données audios ne correspond avec les phonèmes suivants, ou si le phonème détecté est suffisamment proche du phonème attendu pour permettre l'avancement de l'index de position mais n'a pas une correspondance exacte. L'indice de confiance permet ainsi de ne pas déclencher l'effet sonore en cas d'incertitude trop importante sur la précision de suivi des phonèmes. L'indice de confiance peut être également impacté par d'autres paramètres.

En outre, un indice de confiance peut être également appliqué indépendamment à la donnée de prosodie.

La figure 5 représente schématiquement un système 500 de réception et de traitement de données audios selon un mode de réalisation de l'invention. Le système permet la réception et le traitement de données audios correspondant à la lecture en temps réel d'un texte source par au moins un locuteur, pour le déclenchement d'effets sonores synchronisé avec ladite lecture du texte, en mettant en oeuvre les étapes du procédé de réception et de traitement décrit précédemment.

Le système 500 de réception comprend ici un dispositif informatique portatif formé d'un téléphone 510 intelligent (plus connu sous le nom de *smartphone* en anglais) comprenant un module de stockage du texte source, le module de réception des données audios, un module de traitement des données audio, un dispositif de reconnaissance de mouvement et un module d'analyse de la variation de la prosodie, un module de détermination d'effet sonore et un dispositif d'émission sonore, adapté pour mettre en oeuvre les étapes associées du procédé de réception et de traitement des données audios. Le dispositif de reconnaissance de mouvement est par exemple un accéléromètre, un gyromètre, un magnétomètre ou une combinaison. Les différents modules sont gérés par exemple par le processeur et la ou les mémoires de stockages du téléphone 510 intelligent.

Le système 500 de réception comprend également un dispositif d'attache du dispositif de reconnaissance de mouvement, plus particulièrement dans ce mode de réalisation un dispositif d'attache du téléphone 510 intelligent comprenant ce dispositif de reconnaissance du mouvement, configuré pour permettre d'attacher le dispositif de reconnaissance de mouvement à un support sur lequel est imprimé le texte source, de sorte à ce que le dispositif de reconnaissance de mouvement soit mécaniquement solidaire dudit support lors de la lecture du support. Le support sur lequel est imprimé le texte source est ici un livre dont la figure 5 représente une vue 590a de l'intérieur du livre et une vue 590b de l'extérieur du livre.

En particulier, le dispositif d'attache comprend ici un élastique 512 traversant la quatrième de couverture du livre à travers des encoches 514 du dispositif d'attache. Le téléphone 510 intelligent peut par exemple être agencé au niveau de la dernière page 592a de garde du livre (aussi appelée troisième de couverture, troisième plat ou contre plat arrière). De façon alternative non représentée, le téléphone 510 intelligent peut être agencé avec le même dispositif d'attache sur la quatrième de couverture 592b (aussi appelée quatrième plat).

D'autres types de dispositif d'attaches peuvent être mis en oeuvre :
- des éléments élastiques reliés au support sur lequel est imprimé le texte source, configurés pour un maintien en position du dispositif de reconnaissance de mouvement,
- une poche agencée dans la couverture dudit support, configurée pour accueillir le dispositif de reconnaissance de mouvement,
- un compartiment agencé dans la couverture dudit support, configurée pour accueillir le dispositif de reconnaissance de mouvement,
- un aimant permanent agencé sur ledit support et configuré pour une aimantation avec un élément magnétique agencé sur le dispositif de reconnaissance de mouvement, ou un aimant permanent agencé sur le dispositif de reconnaissance de mouvement et configuré pour une aimantation avec un élément magnétique agencé sur ledit support,
- une pochette clipsée sur ledit support, configurée pour accueillir le dispositif de reconnaissance de mouvement
- etc.

Le lien entre le dispositif de reconnaissance de mouvement et le support permet de détecter un mouvement du support, ici le livre, lors de la lecture et de proposer un déclenchement d'effet sonore associé. Un mouvement peut par exemple consister en :
- une rotation du livre à la manière d'un volant de véhicule, et déclencher des effets sonores associés si l'index de position de la lecture est associé à un tel déclenchement,
- un tapotement du livre pour mimer un toquage de porte, ou jouer d'un instrument de percussion,
- secouer le livre pour mimer la secousse de maracas, un mouvement d'un éventail,
- lever le livre,
- tangage gauche/droite pour mimer le bercement d'un animal, d'un bébé, pour le mouvement d'un bâton de pluie,
- roulis avant/arrière pour accélérer/ralentir la musique,
- etc.

Le mouvement peut également devoir être exécuté à un nombre minimum d'occurrences ou avec un angle de rotation minimum pour valider le déclenchement de l'effet sonore.

L'invention ne se limite pas aux modes de réalisation décrits. En particulier :
- les effets sonores peuvent être prédéterminés ou générés en temps réel, par exemple via une intelligence artificielle générative,
- le dispositif de reconnaissance de mouvement peut ne pas être attaché au support du texte source s'il est en mouvement en même temps que le texte source (s'il est intégré dans une montre intelligente portée par le locuteur par exemple),
- une détection de certains mots en complément des phonèmes peut être mise en oeuvre pour la détection de cas particulier, en particulier pour la détection de mots personnalisés remplaçant ou complétant une portion du texte source,
- plusieurs locuteurs peuvent être détectés pendant la lecture du texte source et leur prosodie respective prise en compte.

## Revendications

1. Procédé de réception et de traitement, dans un système de réception et de traitement, de données audios comprenant des paroles correspondant à la lecture en temps réel d'un texte source par au moins un locuteur, pour le déclenchement d'effets sonores synchronisé avec ladite lecture du texte, **caractérisé en ce qu'**il comprend :
- une étape (110) de détermination d'un index (12) de position du locuteur dans le texte source, par détection d'une correspondance entre les données audios réceptionnées et le texte source enregistré dans un module de stockage du système de réception et de traitement,
- une étape (112) de réception d'au moins une donnée représentative d'une valeur de prosodie des données audios, dite donnée (10) de prosodie, et/ou de réception d'au moins une donnée (12) représentative de la présence ou de l'absence d'un mouvement d'un dispositif de reconnaissance de mouvement durant la lecture du texte et représentative de caractéristiques d'un mouvement présent, dite donnée de mouvement,
- une étape (140) de détermination de l'effet sonore à déclencher en fonction de l'index (12) de position, et en fonction de la donnée de prosodie et/ou de la donnée de mouvement,
- une étape (150) de déclenchement de l'effet sonore déterminé.

2. Procédé de réception et de traitement selon la revendication 1, **caractérisé en ce que** le texte source est enregistré dans le dispositif de traitement sous la forme d'une liste de phonèmes, et le dispositif de traitement est configuré pour détecter dans les données audios la présence de phonème correspondant au texte source.

3. Procédé de réception et de traitement selon la revendication 2, **caractérisé en ce que** l'index (12) de position du locuteur correspond à un phonème de la liste de phonèmes du texte source, et **en ce que** l'étape (110) de détermination de l'index de position du locuteur dans le texte source comprend :
- une sous-étape (112) de réception de la position actuelle de l'index (12) dans la liste des phonèmes du texte source,
- une sous-étape (114) de comparaison d'au moins un phonème détecté dans les données audios avec au moins un phonème attendu parmi les phonèmes suivants dans la liste de phonèmes du texte source,
- si aucun phonème détecté dans les données audios ne correspond avec les phonèmes suivants, une sous-étape (116) de réception d'une pluralité de phonèmes détectés dans les données audios et une sous-étape (118) de recherche dans au moins une partie du texte source d'une séquence de phonèmes dans la liste de phonèmes du texte source correspondant à ladite pluralité de phonèmes détectés,
- si la pluralité de phonèmes détectés dans les données audios ne correspondant avec aucune séquence de phonèmes dans la liste de phonèmes du texte source, une sous-étape (120) de recherche dans la totalité du texte source d'une séquence de phonèmes dans la liste de phonèmes du texte source correspondant à ladite pluralité de phonèmes détectés,
- en cas de détection d'une correspondance d'un phonème ou d'une pluralité de phonème détectés avec la liste de phonèmes du texte source, une sous-étape (122) de mise à jour de l'index avec ledit phonème correspondant ou le dernier phonème de la séquence de phonèmes correspondante.

4. Procédé de réception et de traitement selon l'une des revendications 1 à 3, **caractérisé en ce que** l'étape de déclenchement de l'effet sonore comprend une sous-étape (152) de vérification de la valeur d'un indice de confiance et **en ce que** l'effet sonore est déclenché uniquement si l'indice de confiance est supérieur à un seuil prédéterminé.

5. Procédé de réception et de traitement selon une combinaison des revendications 3 et 4, **caractérisé en ce que** la sous-étape (114) de comparaison d'au moins un phonème détecté dans les données audios avec au moins un phonème attendu parmi les phonèmes suivants dans la liste de phonèmes du texte source comprend une détermination d'un indice représentatif de la ressemblance entre le phonème détecté dans les données audios et le phonème de la liste de phonèmes, et **en ce que** si l'indice représentatif de la ressemblance est inférieur à un seuil prédéterminé, une sous-étape (122) de mise à jour de l'index avec ledit phonème détecté et une sous-étape de diminution de l'indice de confiance.

6. Procédé de réception et de traitement selon une combinaison des revendications 2 et 4, **caractérisé en ce qu'**il comprend une étape (162) d'augmentation de la valeur de l'indice de confiance en cas de détection d'une correspondance d'un phonème ou d'une pluralité de phonème détectés avec la liste de phonèmes du texte source et **en ce qu'**il comprend une étape (164) de diminution de la valeur de l'indice de confiance si aucun phonème détecté dans les données audios ne correspond avec les phonèmes suivants.

7. Procédé de réception et de traitement selon l'une des revendications 1 à 6, **caractérisé en ce que** l'ensemble des effets sonores associés au texte source sont répartis dans une pluralité de séquences temporelles associées à des portions du texte source, chaque séquence temporelle étant associée à un effet sonore ou à un groupe d'effets sonores comprenant plusieurs effets sonores, et **en ce que** lorsque l'index de position correspond à une séquence temporelle associée à un groupe d'effets sonores, l'étape de détermination de l'effet sonore à déclencher comprend :
- une sous-étape (142) de récupération, en fonction de l'index de position, du groupe d'effets sonores associé à la séquence temporelle dans laquelle se trouve l'index de position,
- une sous-étape (144) de détermination, en fonction de la donnée de prosodie et/ou de la donnée de mouvement, de l'effet sonore à déclencher parmi les effets sonores du groupe d'effets sonores.

8. Procédé de réception et de traitement selon l'une des revendications 1 à 7, **caractérisé en ce que** la donnée de prosodie comprend des données ou une combinaison de données parmi différents types de données dans la liste suivante :
- des données sur l'intensité des paroles des données audios,
- des données sur la fréquence et/ou la fréquence fondamentale des paroles des données audios,
- des données sur l'intensité et/ou de fréquence et/ou de fréquence fondamentale des consonnes prononcées dans les données audios,
- des données sur l'intensité et/ou de fréquence et/ou de fréquence fondamentale des voyelles prononcées dans les données audios,
- des données sur la longueur des voyelles et/ou des paroles prononcées dans les données audios,
- des données sur la longueur des consonnes prononcées dans les données audios,
- des données sur le débit de parole des données audios.

9. Procédé de réception et de traitement selon l'une des revendications 1 à 8, **caractérisé en ce que** la donnée de mouvement comprend des données relatives à un déplacement et/ou une rotation dans l'espace et/ou à la vitesse de déplacement du dispositif de reconnaissance de mouvement, et/ou des données relatives à la correspondance d'un mouvement ou d'une combinaison de mouvement détectés par le dispositif de reconnaissance de mouvement avec un mouvement prédéterminé parmi une liste de mouvement prédéterminé enregistrée dans un module de stockage du système de traitement.

10. Procédé de réception et de traitement selon l'une des revendications 1 à 9, **caractérisé en ce que** l'étape (150) de déclenchement d'effet sonore est exécutée lorsque l'index (12) de position est à une position égale ou après un index de déclenchement prédéterminé, ou dans une fenêtre de déclenchement prédéterminée, et **en ce que** l'effet sonore peut être immédiatement émis dès que l'index de position atteint ou dépasse l'index de déclenchement ou atteint la fenêtre de déclenchement, ou émis de façon différée après la fin d'un effet sonore en cours d'émission.

11. Produit programme d'ordinateur de réception et de traitement de données audios correspondant à la lecture en temps réel d'un texte source par au moins un locuteur, pour le déclenchement d'effets sonores synchronisé avec ladite lecture du texte, ledit produit programme d'ordinateur comprenant des instructions de code de programme pour l'exécution, lorsque ledit produit programme d'ordinateur est exécuté sur un dispositif informatique, des étapes du procédé selon l'une des revendications 1 à 10.

12. Système de réception et de traitement de données audios correspondant à la lecture en temps réel d'un texte source par au moins un locuteur, pour le déclenchement d'effets sonores synchronisé avec ladite lecture du texte, **caractérisé en ce qu'**il comprend :
- un module de stockage du texte source,
- un module de réception des données audios,
- un module de traitement des données audio, configuré pour la détermination d'un index de position du locuteur dans le texte source, par détection d'une correspondance entre les données audios réceptionnées et le texte source enregistré dans le module de stockage,
- un dispositif de reconnaissance de mouvement configuré pour fournir au moins une donnée représentative de la présence ou de l'absence d'un mouvement d'un dispositif de reconnaissance de mouvement durant la lecture du texte et représentative de caractéristiques d'un mouvement présent, dite donnée de mouvement, et/ou un module d'analyse de la variation de la prosodie des données audios configuré pour fournir au moins une donnée représentative d'une variation de prosodie des données audios
- un module de détermination de l'effet sonore à déclencher en fonction de l'index de position, et en fonction de la donnée de prosodie et/ou de la donnée de mouvement,
- un dispositif d'émission sonore configuré pour l'émission de l'effet sonore déterminé.

13. Système selon la revendication 12, **caractérisé en ce qu'**il comprend un dispositif (510) informatique portatif, de préférence un téléphone intelligent, une tablette numérique ou une montre intelligente, comprenant le module de stockage du texte source, le module de réception des données audios, le module de traitement des données audio, le dispositif de reconnaissance de mouvement et/ou le module d'analyse de la variation de la prosodie, le module de détermination d'effet sonore et le dispositif d'émission sonore.

14. Système selon l'une des revendications 12 ou 13, **caractérisé en ce qu'**il comprend un dispositif de reconnaissance de mouvement et un dispositif (512) d'attache du dispositif de reconnaissance de mouvement, configuré pour permettre d' attacher le dispositif de reconnaissance de mouvement à un support sur lequel est imprimé le texte source, de sorte à ce que le dispositif de reconnaissance de mouvement soit mécaniquement solidaire dudit support lors de la lecture du support.

15. Système selon la revendication 14, **caractérisé en ce que** le dispositif d'attache est formé d'un élément ou d'une combinaison d'éléments parmi les éléments de la liste suivante :
- des éléments (512) élastiques reliés au support sur lequel est imprimé le texte source, configurés pour un maintien en position du dispositif de reconnaissance de mouvement,
- une poche agencée dans la couverture dudit support, configurée pour accueillir le dispositif de reconnaissance de mouvement,
- un compartiment agencé dans la couverture dudit support, configurée pour accueillir le dispositif de reconnaissance de mouvement,
- un aimant permanent agencé sur ledit support et configuré pour une aimantation avec un élément magnétique agencé sur le dispositif de reconnaissance de mouvement, ou un aimant permanent agencé sur le dispositif de reconnaissance de mouvement et configuré pour une aimantation avec un élément magnétique agencé sur ledit support,
- une pochette clipsée sur ledit support, configurée pour accueillir le dispositif de reconnaissance de mouvement.
